**Europäisches Patentamt**

(19) **European Patent Office**

**Office européen des brevets**

(11) Publication number : **0 336 906 B1**

(12) **EUROPEAN PATENT SPECIFICATION**

(45) Date of publication of patent specification :
17.06.92 Bulletin 92/25

(51) Int. Cl.⁵ : **B29C 69/00, B29C 65/52, B29D 22/00, B29D 24/00**

(21) Application number : **89830098.3**

(22) Date of filing : **07.03.89**

(54) An intregated system for the moulding and gluing together of box elements.

(30) Priority : **05.04.88 IT 6729988**

(43) Date of publication of application :
**11.10.89 Bulletin 89/41**

(45) Publication of the grant of the patent :
**17.06.92 Bulletin 92/25**

(84) Designated Contracting States :
**DE ES FR GB SE**

(56) References cited :
**FR-A- 1 168 892**
**GB-A- 551 733**
**US-A- 3 362 045**
**US-A- 4 028 042**
**PATENT ABSTRACTS OF JAPAN, vol. 9, no. 18 (M-353)[1741], 25th January 1985, page 67 M 353 ; & JP-A-59 165 632 (NIPPONSEIKOSHO K.K.) 18-09-1984**

(73) Proprietor : **FIAT AUTO S.p.A.**
**Corso Giovanni Agnelli 200**
**I-10135 Torino (IT)**

(72) Inventor : **Da Re', Mario**
**Via C. Colombo, 9**
**I-10128 Torino (IT)**
Inventor : **Chiesi, Franco**
**Largo Murani, 4**
**I-20133 Milano (IT)**

(74) Representative : **Rambelli, Paolo et al**
**Jacobacci-Casetta & Perani S.p.A. Via Alfieri 17**
**I-10121 Torino (IT)**

# Description

The present invention relates to a moulding apparatus for the manufacture of box elements composed of two shells of thermosetting and/or thermoplastic polymeric material glued together, in which the moulding and gluing operations are integrated, according the preamble of the claim.

Conventional systems for the manufacture of these elements provide separate lines for the moulding and finishing of each of the two shells and then a unit for gluing them together. These systems are therefore more complex than those necessary for the manufacture of similar single-shell elements and have a longer operating cycle.

Other known moulding apparatuses comprise a first vertical press having a die with a punch interposed between its plates and defining a moulding cavity with each of said plates for moulding said shells, and adapted for bonding together said shells while the punch is removed.

US-3 362 045 upon which the preamble of the claim is based, describes a press of such kind which is used in order to mould simultaneously two series of hemispherical-shaped cavities in two plastic sheets. The press is provided with an extraction device which is used in order to extract the interposed punch after the moulding step. The two moulded sheets can so be pressed together forming a plurality of spherical-shaped elements.

JP-59165632 describes an apparatus and a method for injecting and moulding hollow articles in a press of the type described above. First upper and lower shapes are moulded simultaneously using a core die interposed between the die plates, than the core die is removed and a melted material is injected to join the surfaces of the lower and upper shapes, obtaining a hollow article.

FR-1 168 892 describes a method for joining together two separately produced plastic panels by use of adhesive materials.

The object of the present invention consists in a reduction in the number of pieces of equipment necessary and, as for as the gluing unit is concerned, of its elimination. This reduction also involves a decrease in the operating-cycle time. It provides an apparatus of the above cited kind further comprising a second vertical press, said first and second presses being adapted to operate alternately in order to mould and bond together said shells, a single punch being provided, which is adapted for operating alternately with said first and second presses for moulding said shells in one of the presses, while previously moulded shells are being bonded together in the other of said presses.

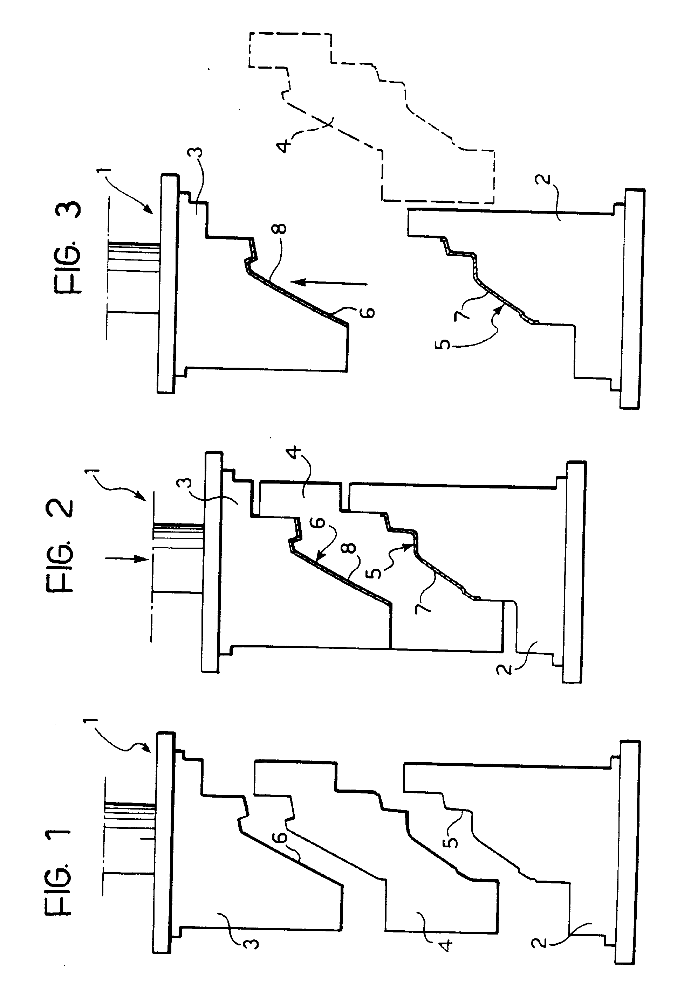

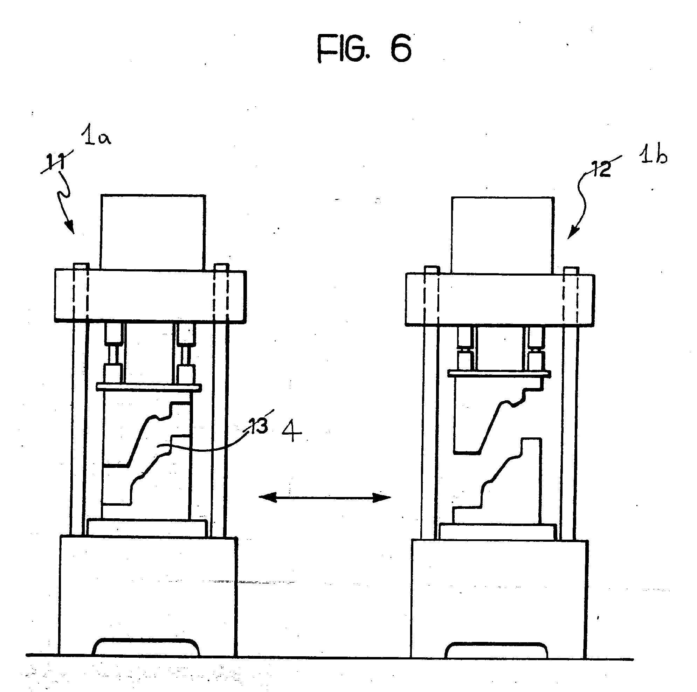

Advantages and characteristics of the present invention will become clear from the detailed description which follows, with reference to the appended drawings, provided by way of non-limiting example in which Figures 1 to 5 show schematically the various operative steps of a press of the apparatus according to the invention and Figure 6 shows the arrangement of the apparatus according to the invention.

A vertical press 1 (see Figures 1 to 5) of known type, shown diagrammatically, has a die constituted by a fixed plate 2 and a vertically movable plate 3 between which is interposed a punch 4 defining, with the two plates, two cavities 5 and 6 respectively.

These cavities serve as impressions for the moulding of the shells 7 and 8 which, once glued together, will constitute a box element.

The punch 4 is movable both parallel to and perpendicular to the direction of movement of the movable plate 3.

The press 1 just described may be used for the moulding and subsequent gluing of two shells of thermosetting material, particularly SMC, BMC and KMC, and/or of thermoplastic material. Further equipment is not necessary for the loading of SMC since this is generally effected manually, whilst injection equipment of known type, not shown in the drawings, is of course necessary for the loading of BMC and KMC. Further differences in equipment will be expected in the case of the use of thermoplastics.

The operative steps of such press, when the shells are moulded in SMC, will now be described with reference to Figures 1 to 5.

The press 1 is first opened (see Figure 1) so that the moulding compound can be put into the cavities 5 and 6 between the punch 4 and the plates 2 and 3 of the die.

The press 1 is then closed (see Figure 2) to enable simultaneous moulding of the two shells 7 and 8. The press 1 is subsequently re-opened (see Figure 3) and it is possible to remove the punch 4, which can in fact slide sideways, whilst the shells 7 and 8 which have just been moulded remain adhering to the respective plates 2 and 3.

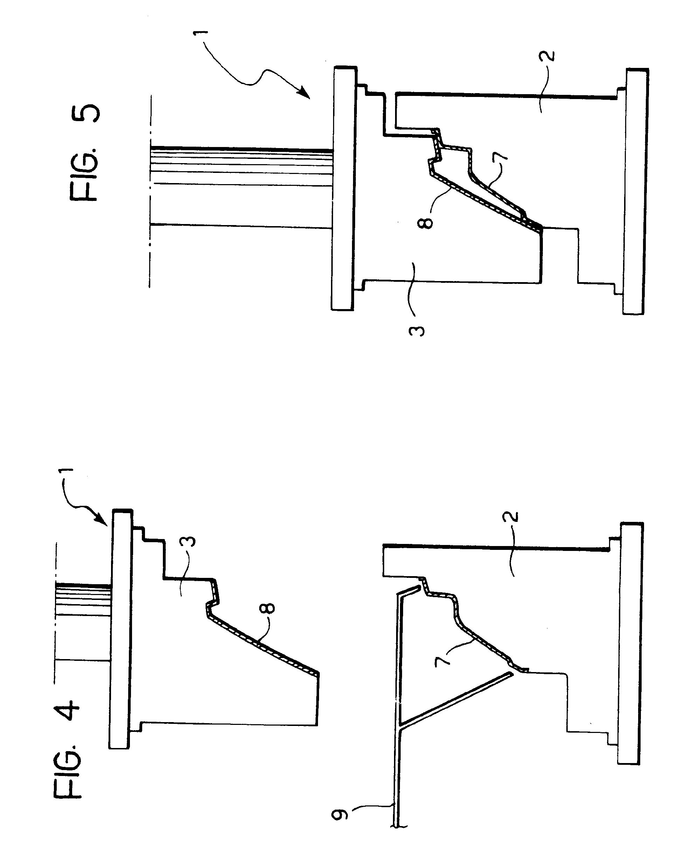

It is thus possible for an adhesive spreader 9 of known type to be inserted in the space left free by the punch (see Figure 4) to spread adhesive on the surface of the shell 7, which adheres to the fixed plate 2, intended for connection to the corresponding surface of the other shell 8. Clearly, it is also possible to spread the adhesive only on the surface of the other shell 8 or on the surfaces of both the shells.

The press 1 is then closed again (see Figure 5) for the time necessary to cause mutual adhesion of the two shells 7 and 8. If the adhesive is very reactive, its polymerisation is completed with this operation, otherwise it is completed during the subsequent painting.

Finally, the press is reopened so that the now-complete box element can be removed and a new operating cycle can begin.

In the apparatus according to the invention, two presses 1a and 1b (see Figure 6) of the type just described, but with a single punch 4, are side by side.

When the punch 4 has been removed from the press 1a upon completion of the moulding, it is introduced into the press 1b. Thus, the spreading of the adhesive and its polymerisation are carried in one press whilst the loading of the thermoplastic material and its moulding are carried out in the other. Upon completion of these steps, the roles of the two presses are reversed and the cycle recommences. It is therefore possible to use a single punch 4 for the two presses 1a and 1b.

## Claims

1. A moulding apparatus for the manufacture of box elements of plastic material made of two shells (7, 8) bonded together along their meeting edges, comprising a first vertical press (1a) having a die with a punch (4) interposed between its plates (2,3) and defining a moulding cavity (5, 6) with each of said plates (2, 3) for moulding said shells (7, 8), and adapted for bonding together said shells (7, 8), while the punch (4) is removed, characterised in that it comprises a second vertical press (1b), said first (1a) and second (1b) presses being adapted to operate alternately in order to mould and bond together said shells (7, 8), a single punch (4) being provided, which is adapted for operating alternately with said first (1a) and second (1b) presses for moulding said shells (7, 8) in one of the presses (1a, 1b), while previously moulded shells (7, 8) are being bonded together in the other of said presses (1b, 1a).

## Patentansprüche

1. Formmaschine für die Herstellung von Kastenelementen aus Kunststoffmaterial, die aus zwei entlang aneinanderliegender Ränder miteinander verklebten Schalen (7,8) gebildet sind, umfassend eine erste Vertikalpresse (1a), welche ein Gesenk mit einem zwischen dessen Platten (2, 3) angeordneten Stempel (4) hat, der mit jeder dieser Platten (2,3) eine Formmulde (5, 6) zum Formen dieser Schalen (7, 8) bildet, und welche dazu ausgelegt ist, diese Scialen (7, 8) miteinander zu verkleben, während der Stempel (4) entfernt ist, dadurch **gekennzeichnet,** daß sie eine zweite Vertikalpresse (1b) umfaßt, wobei die erste (1a) und die zweite (1b) Presse dazu ausgelegt sind, jeweils abwechselnd diese Schalen (7, 8) zu formen bzw. miteinander zu verkleben, und wobei ein einziger Stempel (4) vorgesehen ist, welcher abwechselnd mit der ersten (1a) und der zweiten (1b) Presse zusammenwirken kann und jeweils in einer dieser Pressen (1a, 1b) die Schalen (7, 8) formt, während zuvor geformte Schalen (7, 8) in der anderen dieser Pressen (1b, 1a) miteinander verklebt werden.

## Revendications

1. Appareil de moulage pour la fabrication d'éléments creux en matière plastique constitués par deux coquilles (7, 8) fixées l'une à l'autre le long de leurs bords jointifs, comprenant une première presse verticale (1a) comportant une matrice avec un poinçon (4) disposé entre les plateaux (2, 3) de la matrice et définissant une cavité de moulage (5, 6) avec chacun desdits plateaux (2, 3) pour mouler lesdites coquilles (7, 8), et conçu pour fixer l'une à l'autre lesdites coquilles (7, 8) tandis que le poinçon (4) est retiré, caractérisé en ce qu'il comprend une seconde presse verticale (1b), lesdites première (1a) et seconde (1b) presses étant conçues pour fonctionner tour à tour pour mouler et fixer ensemble lesdites coquilles (7, 8), un seul poinçon (4) étant prévu, ce poinçon étant conçu pour fonctionner tour à tour avec lesdites première (1a) et seconde (1b) presses pour mouler lesdites coquilles (7, 8) dans l'une des presses (1a, 1b) tandis que les coquilles (7, 8) moulées précédemment sont fixées l'une à l'autre dans l'autre desdites presses (1b, 1a).

FIG. 1

FIG. 2

FIG. 3

FIG. 5

FIG. 4

# FIG. 6